(19) Europäisches Patentamt
European Patent Office
Office européen des brevets

(11) EP 0 700 406 B1

(12) **EUROPÄISCHE PATENTSCHRIFT**

(45) Veröffentlichungstag und Bekanntmachung des Hinweises auf die Patenterteilung:
**16.04.1997 Patentblatt 1997/16**

(21) Anmeldenummer: **94917639.0**

(22) Anmeldetag: **17.05.1994**

(51) Int Cl.[6]: **C08F 210/06**, C08F 2/34, C08F 4/622, C08L 23/12, C08L 53/00

(86) Internationale Anmeldenummer:
**PCT/EP94/01592**

(87) Internationale Veröffentlichungsnummer:
**WO 94/28039 (08.12.1994 Gazette 1994/27)**

(54) **STATISTISCHE COPOLYMERISATE DES PROPYLENS**

RANDOM COPOLYMERS OF PROPYLENE

COPOLYMERISATS STATISTIQUES DU PROPYLENE

(84) Benannte Vertragsstaaten:
**BE DE ES FR GB NL**

(30) Priorität: **27.05.1993 DE 4317654**

(43) Veröffentlichungstag der Anmeldung:
**13.03.1996 Patentblatt 1996/11**

(73) Patentinhaber: **BASF AKTIENGESELLSCHAFT**
**67056 Ludwigshafen (DE)**

(72) Erfinder:
- **KERSTING, Meinolf**
  **D-67098 Bad Dürkheim (DE)**
- **LANGHAUSER, Franz**
  **D-67098 Bad Dürkheim (DE)**
- **KERTH, Juergen**
  **D-67316 Carlsberg (DE)**
- **SCHWEIER, Guenther**
  **D-67159 Friedelsheim (DE)**

(56) Entgegenhaltungen:
**EP-A- 0 263 718**
**EP-A- 0 316 692**
**EP-A- 0 355 447**
**EP-A- 0 433 990**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 700 406 B1

Printed by Jouve, 75001 PARIS (FR)

## Beschreibung

Die vorliegende Erfindung betrifft statistische Copolymerisate des Propylens mit 0,1 bis 20 Gew.-% weiterer $C_2$-$C_{10}$-Alk-1-ene, einem Schmelzpunkt unter 155°C, xylollöslichen Anteilen von weniger als 15 Gew.-% und einem Schmelzflußindex von 0,1 bis 100 g/10 min, bei 230°C und unter einem Gewicht von 2,16 kg.

Weiterhin betrifft die Erfindung Verfahren zur Herstellung derartiger statistischer Copolymerisate, deren Verwendung zur Herstellung von Fasern, Folien und Formkörpern sowie die hierbei erhältlichen Fasern, Folien und Formkörper.

Hochisotaktische, hochkristalline Polypropylene zeichnen sich u.a. durch einen Schmelzpunkt von ca. 165°C und niedrige xylollösliche Anteile, verbunden mit hoher Steifigkeit aus. Insbesondere für Anwendungen im Folienbereich benötigt man jedoch flexible Produkte mit abgesenkter Kristallinität.

Bisher konnten diese Eigenschaften beim Polypropylen durch Absenken der Isotaktizität (vgl. DE-A 34 25 456) oder durch den Einbau von anderen Alk-1-enen, wie in der DE-A 40 11 160 beschrieben, erreicht werden. Dabei entstehen statistische Copolymerisate des Propylens mit einem abgesenkten Schmelzpunkt. Die Schmelzpunktabsenkung steigt mit zunehmendem Comonomergehalt.

Die EP-A 433 990 beschreibt Verfahren zur Herstellung von Propylen-Blockcopolymeren mit hoher Fließfähigkeit, wobei die Polymerisation zweistufig durchgeführt wird. Die hierbei erhältlichen Polymere schmelzen in zwei Abschnitten.

Aus der EP-A 355 477 sind Propylen-Isoblockpolymere mit kautschukartigen Eigenschaften bekannt, die Schmelzflußindices weit oberhalb von 100 g/10 min (230°C; 2,16 kg) aufweisen.

Als Nachteil dieser Maßnahmen hat sich der Anstieg der xylollöslichen Anteile erwiesen; ein Effekt, der insbesondere für Anwendungen im medizinischen und Nahrungsmittelsektor unerwünscht ist. Vorteilhaft an diesen statistischen Copolymerisaten ist jedoch unter anderem, daß sie aufgrund ihres niedrigen Schmelzpunktes leicht verarbeitet werden können und eine verringerte Siegeltemperatur aufweisen.

Aus verfahrenstechnischen und wirtschaftlichen Gründen ist man bestrebt, mit möglichst geringen Comonomermengen eine möglichst leichte Verarbeitbarkeit von Polymerisaten zu erzielen. Bei größeren Comonomermengen im Reaktor beobachtet man nämlich u.a. Brockenbildung.

Aufgabe der vorliegenden Erfindung war es daher, statistische Copolymerisate des Propylens zu entwickeln, die sich leicht verarbeiten lassen und zugleich eine gute Anwendbarkeit zeigen, insbesondere im medizinischen Bereich und im Nahrungsmittelsektor.

Demgemäß wurden die eingangs definierten statistischen Copolymerisate des Propylens gefunden.

Diese weisen 0,1 bis 20 Gew.-%, insbesondere 0,5 bis 10 Gew.-% weiterer $C_2$-$C_{10}$-Alk-1-ene, einem Schmelzpunkt unter 155°C, bevorzugt unter 150°C, xylollösliche Anteile von weniger als 15 Gew.-%, insbesondere von weniger als 12 Gew.-% und einen Schmelzflußindex von 0,1 bis 100 g/10 min, vorzugsweise von 1 bis 50 g/10 min, bei 230°C und unter einem Gewicht von 2,16 kg, auf.

Als $C_2$-$C_{10}$-Alk-1-ene sollen dabei insbesondere Ethylen, But-1-en, Pent-1-en, Hex-1-en, Hept-1-en und Oct-1-en sowie Gemische aus mehreren dieser Alk-1-ene verstanden werden. Bevorzugte $C_2$-$C_{10}$-Alk-1-ene sind Ethylen und But-1-en, sowie Gemische aus diesen beiden Alk-1-enen.

Als Schmelzpunkt dieser statistischen Copolymerisate soll der mittels Differential Scanning Calorimetry (DSC) bestimmte Schmelzpunkt verstanden werden.

Der xylollösliche Anteil wird dabei in destilliertem, siedendem Xylol ermittelt.

Der Schmelzflußindex der statistischen Copolymerisate des Propylens bezieht sich auf diejenige Menge am Copolymerisat, die innerhalb von 10 Minuten aus der nach DIN 53 735 genormten Prüfvorrichtung bei einer Temperatur von 230°C und unter einem Gewicht von 2,16 kg ausgepreßt wird.

Die hierbei angewandten Prüfungsverfahren sind dem durchschnittlichen Fachmann geläufig.

Besonders bevorzugte statistische Copolymerisate des Propylens enthalten als $C_2$-$C_{10}$-Alk-1-ene Ethylen und weisen einen Schmelzpunkt auf, der folgender Bedingung (I) gehorcht:

$$\text{Schmelzpunkt} < 155°\text{C} - x \cdot 6{,}5°\text{C} \qquad \text{(I)},$$

wobei x für den prozentualen Gewichtsanteil des Ethylens, bezogen auf das Gesamtpolymerisat, steht.

Weitere besonders bevorzugte statistische Copolymerisate des Propylens enthalten als $C_2$-$C_{10}$-Alk-1-ene But-1-en und weisen einen Schmelzpunkt auf, der folgender Bedingung (II) gehorcht:

$$\text{Schmelzpunkt} < 155°\text{C} - y \cdot 2{,}3°\text{C} \qquad \text{(II)},$$

wobei y für den prozentualen Gewichtsanteil des But-1-ens, bezogen auf das Gesamtpolymerisat, steht.

Darüber hinaus sind auch solche statistischen Copolymerisate besonders bevorzugt, welche als $C_2$-$C_{10}$-Alk-1-ene sowohl Ethylen als auch But-1-en enthalten und deren Schmelzpunkt der folgenden Bedingung (III) gehorcht:

$$\text{Schmelzpunkt} < 155°C - x \cdot 6{,}5°C - y \cdot 2{,}3°C \qquad \text{(III)},$$

wobei x für den prozentualen Gewichtsanteil des Ethylens und y für den prozentualen Gewichtsanteil des But-1-ens, bezogen auf das Gesamtpolymerisat, steht.

Das Zeichen "<" steht dabei sowohl bei (I) als auch bei (II) und (III) für "kleiner als".

Die hierbei angeführten Bedingungen (I), (II) und (III) sind so zu verstehen, daß die besonders bevorzugten statistischen Copolymerisate eine, bezogen auf den jeweiligen Comonomeranteil, über das üblicherweise zu erwartende Maß hinausgehende Schmelzpunktabsenkung aufweisen. Dies hat zur Folge, daß ihre Schmelzpunkte teilweise erheblich unterhalb von 155°C liegen.

Die erfindungsgemäßen statistischen Copolymerisate des Propylens sind erhältlich durch Copolymerisation von Propylen mit $C_2$-$C_{10}$-Alk-1-enen bei Temperaturen im Bereich von 0 bis 100°C und Drücken im Bereich von 1 bis 300 bar in Gegenwart von Katalysatorsystemen, die als aktive Bestandteile Metallocenkomplexe von Metallen der IV. und V. Nebengruppe des Periodensystems und oligomere Aluminiumoxidverbindungen aufweisen.

Die Copolymerisation des Propylens mit den $C_2$-$C_{10}$-Alk-1-enen kann in Lösung, in Suspension, in Masse oder in der Gas-phase durchgeführt werden. Besonders bevorzugt ist die Gasphasenpolymerisation, insbesondere bei Temperaturen im Bereich von 30 bis 100°C, bevorzugt 50 bis 90°C, und Drücken im Bereich von 5 bis 40 bar, bevorzugt 15 bis 35 bar. Dabei liegen die Partialdruckverhältnisse zwischen Propylen und den $C_2$-$C_{10}$-Alk-1-enen üblicherweise bei 100:1 bis 1:1, insbesondere bei 80:1 bis 2:1.

Die zur Herstellung der erfindungsgemäßen statistischen Copolymerisate des Propylens eingesetzten Katalysatorsysteme enthalten als aktive Bestandteile u.a. Metallocenkomplexe von Metallen der IV. und V. Nebengruppe des Periodensystems, insbesondere von Titan, Zirkonium, Hafnium, Vanadium, Niob oder Tantal. Vorzugsweise werden dabei solche Komplexverbindungen verwendet, bei denen das Metallatom über $\pi$-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und Iod oder einem $C_1$- bis $C_{10}$-Alkyl, beispielsweise einer Methyl-, Ethyl-, Propyl- oder Butylgruppe, verknüpft sein kann.

Besonders geeignete Metallocenkomplexe lassen sich durch folgende allgemeine Formel IV kennzeichnen:

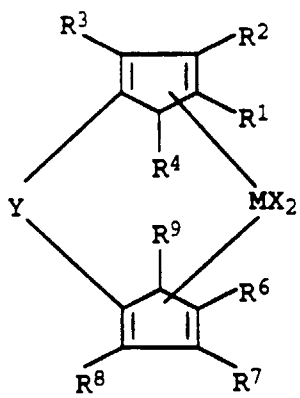

IV

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^5$, |
| wobei $R^5$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^4$ und $R^6$ bis $R^9$ | Wasserstoff, $C_1$- bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gege- |

benenfalls auch zwei benachbarte Reste gemeinsam für 4 bis 15 C-Atome aufweisende cyclische gesättigte, teilweise gesättigte oder ungesättigte Gruppen stehen können, oder $Si(R^{10})_3$ mit

$R^{10}$ $C_1$- bis $C_{10}$-Alkyl, $C_6$- bis $C_{15}$-Aryl oder $C_3$- bis $C_{10}$-Cycloalkyl,

Y für $R^{11}R^{12}Z<$ oder

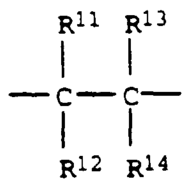

steht,

wobei Z Silicium, Germanium, Zinn oder Kohlenstoff bedeutet,

$R^{11}$,$R^{12}$,$R^{13}$,$R^{14}$ Wasserstoff, $C_1$- bis $C_{10}$-Alkyl, $C_3$- bis $C_{10}$-Cycloalkyl oder $C_6$- bis $C_{15}$-Aryl, wobei gegebenenfalls auch zwei benachbarte Reste gemeinsam für 4 bis 15 C-Atome aufweisende cyclische Gruppen stehen können.

Von den Verbindungen der Formel IV sind diejenigen besonders geeignet, in denen

$R^1$ und $R^6$ gleich sind und für Wasserstoff oder $C_1$- bis $C_{10}$-Alkylgruppen stehen,

$R^4$ und $R^9$ gleich sind und für Wasserstoff, eine Methyl-, Ethyl-, iso-Propyl- oder tert.-Butylgruppe stehen,

$R^2$, $R^3$, $R^7$ und $R^8$ die Bedeutung
$R^3$ und $R^8$ $C_1$- bis $C_4$-Alkyl
$R^2$ und $R^7$ Wasserstoff
haben oder zwei benachbarte Reste $R^2$ und $R^3$ sowie $R^7$ und $R^8$ gemeinsam für 4 bis 12 C-Atome aufweisende cyclische Gruppen stehen,

$R^{11}$,$R^{12}$,$R^{13}$ und $R^{14}$ für Wasserstoff oder $C_1$- bis $C_8$-Alkyl,

M für Zirkonium oder Hafnium und

X für Chlor stehen.

Beispiele für besonders geeignete Komplexverbindungen sind u.a.

Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis(tetrahydroindenyl)-zirkoniumdichlorid,
Ethylenbis(-2-methylindenyl)-zirkoniumdichlorid,
Ethylenbis(-2-methylindenyl)-hafniumdichlorid,
Ethylenbis(-2-methylbenzindenyl)-zirkoniumdichlorid,
Ethylenbis(-2-methylbenzindenyl)-hafniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,

Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.-butylindenyl)-zirkoniumdichlorid,
Diethylsilandiylbis(-2-methylindenyl)-zirkoniumdibromid,
Dimethylsilandiylbis(-2-methyl-5-methylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylbenzindenyl)-zirkoniumdichlorid, und
Dimethylsilandiylbis(-2-methylindenyl)-hafniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Die Metallocenkomplexe kannen auch in kationischer Form vorliegen, wie in der EP-A 277 003 und der EP-A 277 004 beschrieben wird. Weiterhin kann auch µ-Oxo-bis-(chlorobiscyclopentadienyl)-zirkonium als Metallocenkomplex verwendet werden.

Neben den Metallocenkomplexen enthalten die zur Herstellung der erfindungsgemäßen statistischen Copolymerisate des Propylens eingesetzten Katalysatorsysteme noch oligomere Aluminiumoxidverbindungen. Geeignet sind beispielsweise offenkettige oder cyclische Alumoxanverbindungen der allgemeinen Formeln V oder VI

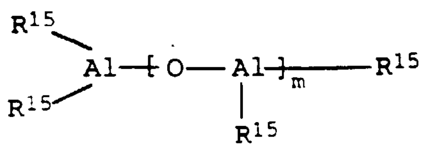

V

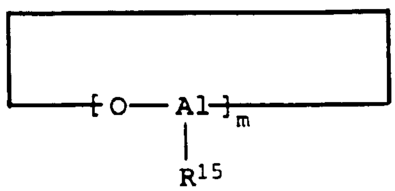

VI

wobei $R^{15}$ eine $C_1$- bis $C_4$-Alkylgruppe, bevorzugt eine Methyl- oder Ethylgruppe bedeutet und m für eine ganze Zahl von 5 bis 30, bevorzugt 10 bis 25, steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis $10^6$:1, insbesondere im Bereich von 10:1 bis $10^4$:1, liegt.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Bei der Herstellung der erfindungsgemäßen statistischen Copolymerisate des Propylens hat es sich als vorteilhaft erwiesen, wenn ein geträgertes Katalysatorsystem eingesetzt wird. Geeignete Trägermaterialien sind beispielsweise Kieselgele, bevorzugt solche der Formel $SiO_2 \cdot a\ Al_2O_3$, worin a für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. als Silica Gel 332 der Firma Grace.

Bei einem besonders bevorzugten Verfahren zur Herstellung der erfindungsgemäßen statistischen Copolymerisate des Propylens stellt man zuerst das Trägermaterial für den Katalysator her, dann erfolgt die Herstellung des geträgerten Katalysatorkomplexes und anschließend die Polymerisation.

Bei der Herstellung des Trägermaterials hat es sich als vorteilhaft erwiesen, die feuchten Kieselgele in Kohlenwasserstoffen, vorzugsweise in Heptan, zu suspendieren und mit Trialkylaluminium, vorzugsweise mit Triethylaluminium, zu versetzen, zu filtrieren und zu trocknen.

Zur Herstellung des geträgerten Katalysatorkomplexes geht man vorzugsweise so vor, daß man den Metallocenkomplex der allgemeinen Formel IV mit Lösungsmittel versetzt, insbesondere mit Toluol, und hierzu eine Lösung von oligomeren Alumoxanverbindungen der allgemeinen Formeln V oder VI gibt, vorzugsweise Methylalumoxan, wobei als Lösungsmittel insbesondere dasjenige verwendet wird, welches auch beim Metallocenkomplex eingesetzt wurde, also bevorzugt Toluol. Anschließend wird das Trägermaterial zugegeben, wobei das Gewichtsverhältnis von Katalysator zu Trägermaterial 10:1 bis 1000:1 ausmacht, bevorzugt 100:1 bis 500:1. Anschließend wird das Lösungsmittel entfernt, wodurch ein Katalysatorpulver erhalten wird.

Die eigentliche Polymerisation wird bevorzugt in der Gasphase durchgeführt, wobei man üblicherweise in einem Autoklaven Polypropylengrieß vorlegt und mit Trialkylaluminium, vorzugsweise Triethylaluminium, welches als Cokatalysator dient, versetzt. Das Gewichtsverhältnis von Polypropylengrieß zu Trialkylaluminium beträgt i.a. 10:1 bis 10000:1, bevorzugt 20:1 bis 200:1. Anschließend gibt man 30 Gew.-%, bezogen auf die Menge an Trialkylaluminium, an Trägerkatalysator zu, heizt auf Temperaturen bis 100°C, bevorzugt 70°C, auf und erhöht den Innendruck durch Alk-1-enzufuhr bis auf 50 bar, vorzugsweise auf 28 bar. Nach beendeter Polymerisation wird der Autoklav entspannt.

Die erfindungsgemäßen statistischen Copolymerisate des Propylens weisen einen überraschend deutlich abgesenkten Schmelzpunkt und einen niedrigen xylollöslichen Anteil auf. Sie lassen sich gut verarbeiten, sind in vielen Bereichen anwendbar und eignen sich insbesondere zur Herstellung von Folien, Fasern und Formkörpern.

## Beispiele

### Beispiel 1

a) Herstellung des Trägermaterials

Zu einer Suspension von 20,2 g Kieselgel (Fa. Grace, SG 332, Teilchendurchmesser 20 - 45 µm) in 200 ml Heptan wurden bei Raumtemperatur im Laufe von 30 min 56 ml einer Lösung von 6,4 g Triethylaluminium in 48 ml Heptan zugetropft. Dabei stieg die Temperatur auf 44°C an. Nach 18 Stunden Rühren bei Raumtemperatur wurde abfiltriert, zweimal mit je 30 ml Pentan gewaschen und anschließend am Ölpumpenvakuum bis zur Rieselfähigkeit des Trägermaterials getrocknet.

b) Herstellung der geträgerten Metallocenkomponente

Zu 50 µmol Dimethylsilandiylbis(-2-methylbenzo[e]-indenyl)zirkondichlorid (29 mg) in 20 ml Toluol wurden 13,1 ml (20 mmol) einer Lösung von Methylalumoxan in Toluol (1,53 molar, Fa. WITCO GmbH) gegeben und 15 min gerührt. Anschließend wurden 5 g des Trägermaterials zugegeben und weitere 30 min gerührt, Zuletzt wurde das Lösungsmittel bei Raumtemperatur im Laufe von 4 Stunden am Ölpumpenvakuum entfernt. Es entstand ein gut rieselfahiges Katalysatorpulver.

c) Polymerisation

In einem trockenen, mit Stickstoff gespülten 10-Liter-Autoklaven wurden nacheinander 50 g Polypropylengrieß und 4,8 ml Triethylaluminium (1 molare Lösung in Heptan) gegeben und 15 min geruhrt. Anschließend wurden 1,5 g des Trägerkatalysators im Stickstoff-Gegenstrom in den Autoklaven gefüllt und dieser verschlossen. Bei einer Rührerdrehzahl von 350 U/min wurde auf 70°C aufgeheizt und gleichzeitig der Innendruck stufenweise durch Propylenzufuhr bis zum Enddruck von 28 bar erhöht. Anschließend wurde bei einem Druck von 28 bar und 70°C über eine geeignete Verhältnisregelung ein gasförmiges Gemisch aus Propylen und Ethylen eingeleitet, wobei das Verhältnis zwischen dem Partialdruck des Propylens und dem des Ethylens 31:1 betrug. Die Polymerisation wurde unter ständigem Rührem bei 28 bar und 70°C im Laufe von 1,5 Stunden durchgeführt. Hierbei wurden die verbrauchten Monomere kontinuierlich ersetzt.

Nach Beendigung der Gasphasenpolymerisation wurde während 10 min. auf Atmosphärendruck entspannt und das entstandene Produkt im Stickstoffstrom ausgetragen.

Die Zusammensetzung des Copolymerisats und die wichtigsten Daten zur Charakterisierung sind der nachfolgenden Tabelle zu entnehmen.

Beispiel 2:

Mit dem gleichen Katalysatorsystem und unter den Reaktionsbedingungen wie in Beispiel 1 beschrieben, wurde ein gasförmiges Gemisch aus Propylen und Ethylen polymerisiert, wobei das Verhältnis zwischen dem Partialdruck des Propylens und dem des Ethylens 25:1 betrug.

Beispiel 3:

Mit dem gleichen Katalysatorsystem und unter den Reaktionsbedingungen wie in Beispiel 1 beschrieben, wurde ein gasförmiges Gemisch aus Propylen und But-1-en polymerisiert, wobei das Verhältnis zwischen dem Partialdruck des Propylens und dem des But-1-ens 25:1 betrug.

Beispiel 4:

Mit dem gleichen Katalysatorsystem und unter den Reaktionsbedingungen wie in Beispiel 1 beschrieben, wurde ein gasförmiges Gemisch aus Propylen und But-1-en polymerisiert, wobei das Verhältnis zwischen dem Partialdruck des Propylens und dem des But-1-ens 20:1 betrug.

Beispiel 5:

Mit dem gleichen Katalysatorsystem und unter den Reaktionsbedingungen wie in Beispiel 1 beschrieben, wurde ein gasförmiges Gemisch aus Propylen, Ethylen und But-1-en polymerisiert. Das Verhältnis der Partialdrücke zwischen Propylen, Ethylen und But-1-en betrug dabei 25 : 1 : 0,65.

Tabelle:

| Beispiel | 1 | 2 | 3 | 4 | 5 |
|---|---|---|---|---|---|
| Molverhältnis Al:Zr | 800:1 | 800:1 | 800:1 | 800:1 | 800:1 |
| Produktivität (g Polymer/g Trägerkatalysator) | 3450 | 3720 | 3260 | 3610 | 3970 |
| Ethylen-Gehalt (Gew.-%) im Polymerisat | 2.6 | 3.9 | - | - | 4.1 |
| But-1-en-Gehalt (Gew.-%) im Polymerisat | - | - | 4.9 | 6.1 | 1.9 |
| Xylollöslicher Anteil (%) | 5.8 | 7.7 | 3.0 | 3.6 | 11.0 |
| DSC-Schmelzmaximum (°C) | 128 | 119 | 125 | 121 | 109 |
| Schmelflußindex* [g/10 min] | 10,4 | 12,1 | 11,3 | 13,6 | 13,1 |

*) bei 230°C und 2,16 kg, nach DIN 53 735

Die Schmelzpunkte wurden mittels DSC-Messungen (10°C/min Aufheizrate) bestimmt.

Die xylollöslichen Anteile wurden folgendermaßen bestimmt:

In einen 1-Liter-Dreihalskolben mit Rührer, Rückflußkühler und Thermometer wurden 500 ml destilliertes Xylol (Isomerengemisch) eingefüllt und auf 100°C erhitzt. Bei dieser Temperatur wurde das Polymere eingefüllt, anschließend auf den Siedepunkt des Xylols erhitzt und 60 min am Rückfluß gehalten. Anschließend wurde die Wärmezufuhr abgebrochen, innerhalb von 20 min mit einem Kältebad auf 5°C abgekühlt und dann wieder auf 20°C erwärmt. Diese Temperatur wurde für 30 min gehalten. Das ausgefallene Polymerisat wurde abfiltriert und von dem Filtrat exakt 100 ml in einen vorher tarierten 250-ml-Einhalskolben gefüllt. Daraus wurde das Lösungsmittel am Rotationsverdampfer entfernt. Anschließend wurde der verbleibende Rückstand im Vakuumtrockenschrank bei 80°C/200 Torr für 2 h getrocknet. Nach dem Erkalten wurde ausgewogen.

Der xylollösliche Anteil ergibt sich aus

$$xl = \frac{g \times 500 \times 100}{G \times V}$$

xl = xylollöslicher Anteil in %

g = gefundene Menge

G = Produkteinwaage

V = Volumen der eingesetzten Filtratmenge

## Patentansprüche

1. Statistische Copolymerisate des Propylens mit 0,1 bis 20 Gew.-%.weiterer $C_2$-$C_{10}$-Alk-1-ene, einem Schmelzpunkt unter 155°C, xylollöslichen Anteilen von weniger als 15 Gew.-% und einem Schmelzflußindex von 0,1 bis 100 g/ 10 min, bei 230°C und unter einem Gewicht von 2,16 kg.

2. Statistische Copolymerisate nach Anspruch 1, enthaltend 0,5 bis 10 Gew.-% weiterer $C_2$-$C_{10}$-Alk-1-ene.

3. Statistische Copolymerisate nach den Ansprüchen 1 oder 2 mit einem Schmelzflußindex von 1 bis 50 g/10 min, bei 230°C und unter einem Gewicht von 2,16 kg.

4. Statistische Copolymerisate nach den Ansprüchen 1 bis 3, welche als $C_2$-$C_{10}$-Alk-1-ene Ethylen enthalten und deren Schmelzpunkt der folgenden Bedingung (I) gehorcht:

$$\text{Schmelzpunkt} < 155°C - x \cdot 6{,}5°C \qquad (I),$$

wobei x für den prozentualen Gewichtsanteil des Ethylens, bezogen auf das Gesamtpolymerisat, steht.

5. Statistische Copolymerisate nach den Ansprüchen 1 bis 3, welche als $C_2$-$C_{10}$-Alk-1-ene But-1-en enthalten und deren Schmelzpunkt der folgenden Bedingung (II) gehorcht:

$$\text{Schmelzpunkt} < 155°C - y \cdot 2{,}3°C \qquad (II),$$

wobei y für den prozentualen Gewichtsanteil des But-1-ens, bezogen auf das Gesamtpolymerisat, steht.

6. Statistische Copolymerisate nach den Ansprüchen 1 bis 3, welche als $C_2$-$C_{10}$-Alk-1-ene sowohl Ethylen als auch But-1-en enthalten und deren Schmelzpunkt der folgenden Bedingung (III) gehorcht:

$$\text{Schmelzpunkt} < 155°C - x \cdot 6{,}5°C - y \cdot 2{,}3°C \qquad (III),$$

wobei x für den prozentualen Gewichtsanteil des Ethylens und y für den prozentualen Gewichtsanteil des But-1-ens, jeweils bezogen auf das Gesamtpolymerisat, steht.

7. Statistische Copolymerisate nach den Ansprüchen 1 bis 6 mit xylollöslichen Anteilen von weniger als 12 Gew.-%.

8. Statistische Copolymerisate nach den Ansprüchen 1 bis 7, erhältlich durch Polymerisation eines Gemisches aus Propylen und weiterer $C_2$-$C_{10}$-Alk-1-ene bei Temperaturen im Bereich von 0 bis 100°C und Drücken im Bereich von 1 bis 300 bar in Gegenwart von Katalysatorsystemen, die als aktive Bestandteile Metallocenkomplexe von Metallen der IV. und V. Nebengruppe des Periodensystems und oligomere Aluminiumoxidverbindungen enthalten.

9. Statistische Copolymerisate nach Anspruch 8, erhältlich durch Polymerisation in der Gasphase bei Temperaturen im Bereich von 30 bis 100°C und Drücken im Bereich von 5 bis 40 bar.

10. Statistische Copolymerisate nach den Ansprüchen 8 oder 9, wobei als Metallocenkomplexe von Metallen der IV. und V. Nebengruppe des Periodensystems
Metallocenkomplexe der allgemeinen Formel IV

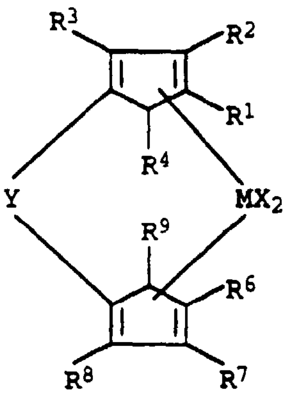

IV

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^5$, |
| wobei $R^5$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^4$ und $R^6$ bis $R^9$ | Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$-bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^{10})_3$ mit |
| $R^{10}$ | $C_1$- bis $C_{10}$-Alkyl, $C_6$- bis $C_{15}$-Aryl oder $C_3$-bis $C_{10}$-Cycloalkyl, |
| y | für $R^{11}R^{12}Z<$ oder 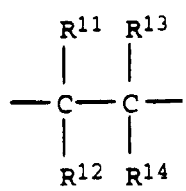 steht, |
| wobei Z | Silicium, Germanium, Zinn oder Kohlenstoff bedeutet, |
| $R^{11}$,$R^{12}$,$R^{13}$,$R^{14}$ | Wasserstoff, $C_1$- bis $C_{10}$-Alkyl $C_3$- bis $C_{10}$-Cycloalkyl oder $C_6$- bis $C_{15}$-Aryl, wobei gegebenenfalls auch zwei benachbarte Reste gemeinsam für 4 bis 15 C-Atome aufweisende cyclische Gruppen stehen können, |

eingesetzt werden und als oligomere Aluminiumoxidverbindungen offenkettige oder cyclische Alumoxanverbindungen der allgemeinen Formeln V oder VI

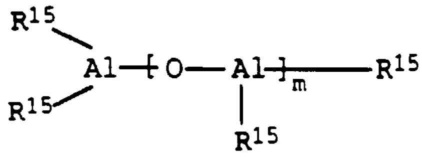

V

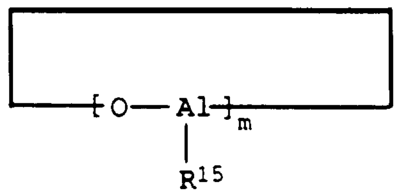

VI

wobei $R^{15}$ eine $C_1$- bis $C_4$-Alkylgruppe bedeutet und m für eine ganze Zahl von 5 bis 30 steht.

**11.** Verfahren zur Herstellung von statistischen Copolymerisaten des Propylens gemäß den Verfahrensbedingungen von Anspruch 8.

**12.** Verwendung der statistischen Copolymerisate gemäß den Ansprüchen 1 bis 10 zur Herstellung von Fasern, Folien und Formkörpern.

**13.** Fasern, Folien und Formkörper, erhältlich aus den statistischen Copolymerisaten gemäß den Ansprüchen 1 bis 10 als wesentliche Bestandteile.

**Claims**

**1.** A random copolymer of propylene with from 0.1 to 20% by weight of further $C_2$-$C_{10}$-alk-1-enes, having a melting point of less than 155°C and xylene-soluble fractions of less than 15% by weight and possessing a melt flow index of from 0.1 to 100 g/10 min at 230°C and under a weight of 2.16 kg.

**2.** A random copolymer as claimed in claim 1, containing from 0.5 to 10% by weight of further $C_2$-$C_{10}$-alk-1-enes.

**3.** A random copolymer as claimed in claim 1 or 2, having a melt flow index of from 1 to 50 g/10 min at 230°C and under a weight of 2.16 kg.

**4.** A random copolymer as claimed in any of-claims 1 to 3, which contains ethylene as the $C_2$-$C_{10}$-alk-1-ene and whose melting point obeys the following condition (I):

$$\text{Melting point} < 155°C - x \cdot 6.5°C \quad (I),$$

where x is the percentage by weight, based on the total polymer, of ethylene.

**5.** A random copolymer as claimed in any of claims 1 to 3, which contains but-1-ene as the $C_2$-$C_{10}$-alk-1-ene and whose melting point obeys the following condition (II):

$$\text{Melting point} < 155°C - y \cdot 2.3°C \quad (II),$$

where y is the percentage by weight, based on the total polymer, of but-1-ene.

**6.** A random copolymer as claimed in any of claims 1 to 3, which contains both ethylene and but-1-ene as $C_2$-$C_{10}$-alk-1-enes and whose melting point obeys the following condition (III):

$$\text{Melting point} < 155°C - x \cdot 6.5°C - y \cdot 2.3°C \quad \text{(III)},$$

where x is the percentage by weight of ethylene and y is the percentage by weight of but-1-ene, the percentages in each case being based on the total polymer.

**7.** A random copolymer as claimed in any of claims 1 to 6, having a xylene-soluble fraction of less than 12% by weight.

**8.** A random copolymer as claimed in any of claims 1 to 7, obtainable by polymerizing a mixture of propylene and further $C_2$-$C_{10}$-alk-1-enes at from 0 to 100°C and from 1 to 300 bar in the presence of a catalyst system which contains, as active components, a metallocene complex of a metal of subgroup IV or V of the Periodic Table of Elements and an oligomeric aluminum compound.

**9.** A random copolymer as claimed in claim 8, obtainable by polymerization in the gas phase at from 30 to 100°C and from 5 to 40 bar.

**10.** A random copolymer as claimed in claim 8 or 9, wherein a metallocene complex of the formula IV

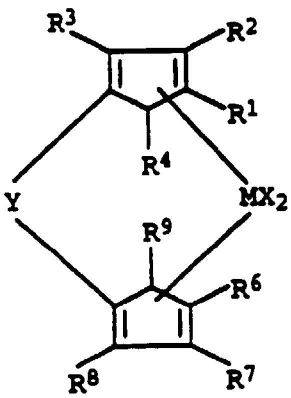

IV

where

M is titanium, zirconium, hafnium, vanadium, niobium or tantalum,
X is fluorine, chlorine, bromine, iodine, hydrogen, $C_1$-$C_{10}$-alkyl, $C_6$-$C_{15}$-aryl or $-OR^5$,
$R^5$ is $C_1$-$C_{10}$-alkyl, $C_6$-$C_{15}$-aryl, alkylaryl, arylalkyl, fluoroalkyl or fluoroaryl each having 1 to 10 carbon atoms in the alkyl radical and 6 to 20 carbon atoms in the aryl radical,
$R^1$ to $R^4$ and $R^6$ to $R^9$ are each hydrogen, $C_1$-$C_{10}$-alkyl, 5-membered to 7-membered cycloalkyl which in turn may carry $C_1$-$C_{10}$-alkyl radicals as substituents, $C_6$-$C_{15}$-aryl or arylalkyl, where two adjacent radicals together may furthermore be a cyclic group of 4 to 15 carbon atoms, or $Si(R^{10})_3$,
$R^{10}$ is $C_1$-$C_{10}$-alkyl, $C_6$-$C_{15}$-aryl or $C_3$-$C_{10}$-cycloalkyl,
Y is $R^{11}R^{12}Z<$ or

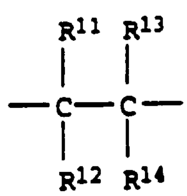

Z is silicon, germanium, tin or carbon and
$R^{11}$, $R^{12}$, $R^{13}$ and $R^{14}$ are each hydrogen, $C_1$-$C_{10}$-alkyl, $C_3$-$C_{10}$-cycloalkyl or $C_6$-$C_{15}$-aryl, where two adjacent radicals together may furthermore be a cyclic group of 4 to 15 carbon atoms,

is used as the metallocene complex of a metal of subgroup IV or V of the Periodic Table of Elements and

an open-chain or cyclic alumoxane compound of the formula V or VI

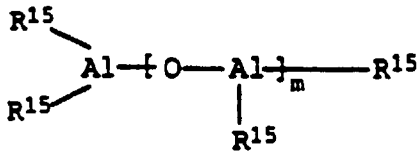

V

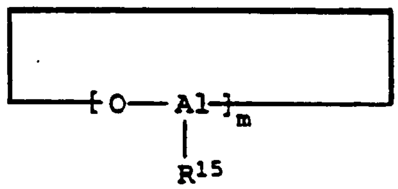

VI

where $R^{15}$ is $C_1$-$C_4$-alkyl and m is an integer of from 5 to 30, is used as the oligomeric alumina compound.

**11.** A process for the preparation of a random propylene copolymer according to the process conditions of claim 8.

**12.** Use of a random copolymer as claimed in any of claims 1 to 10 for the production of fibers, films and moldings.

**13.** A fiber, film or molding obtainable from a random copolymer as claimed in any of claims 1 to 10 as an essential component.

**Revendications**

**1.** Copolymères statistiques du propylène avec 0,1 à 20 % en poids d'alc-1-ènes en $C_2$-$C_{10}$ supplémentaires, un point de fusion inférieur à 155 °C, des fractions solubles dans le xylène de moins de 15 % en poids et un indice de fusion de 0,1 à 100 g/10 min, à 230 °C et sous un poids de 2,16 kg.

**2.** Copolymères statistiques selon la revendication 1, contenant 0,5 à 10 % en poids d'alc-1-ènes en $C_2$-$C_{10}$ supplémentaires.

**3.** Copolymères statistiques selon les revendications 1 ou 2, avec un indice de fusion de 1 à 50 g/10 min, à 230 °C et sous un poids de 2,16 kg.

**4.** Copolymères statistiques selon les revendications 1 à 3, qui contiennent de l'éthylène à titre d'alc-1-ènes en $C_2$-$C_{10}$ et dont le point de fusion remplit la condition (I) suivante :

$$\text{point de fusion} < 155\ °C - x \cdot 6{,}5\ °C \qquad (I),$$

x représentant le pourcentage pondéral de l'éthylène, par rapport au polymère total.

**5.** Copolymères statistiques selon les revendications 1 à 3, qui contiennent du but-1-ène à titre d'alc-1-ènes en $C_2$-$C_{10}$ et dont le point de fusion remplit la condition (II) suivante :

$$\text{point de fusion} < 155\ °C - y \cdot 2{,}3\ °C \qquad (II),$$

y représentant le pourcentage pondéral du but-1-ène, par rapport au polymère total.

**6.** Copolymères statistiques selon les revendications 1 à 3, qui contiennent tant de l'éthylène que du but-1-ène à titre d'alc-1-ènes en $C_2$-$C_{10}$ et dont le point de fusion remplit la condition (III) suivante :

$$\text{point de fusion} < 155\,°C - x \cdot 6{,}5\,°C - y \cdot 2{,}3\,°C \qquad (III),$$

x représentant le pourcentage pondéral de l'éthylène et y représentant le pourcentage pondéral du but-1-ène, respectivement par rapport au polymère total.

**7.** Copolymères statistiques selon les revendications 1 à 6, avec des fractions solubles dans le xylène de moins de 12 % en poids.

**8.** Copolymères statistiques selon les revendications 1 à 7, pouvant être obtenus par polymérisation d'un mélange constitué de propylène et d'alc-1-ènes en $C_2$-$C_{10}$ supplémentaires à des températures dans la gamme de 0 à 100°C et à des pressions dans la gamme de 1 à 300 bar en présence de systèmes catalytiques, qui contiennent à titre de constituants actifs des complexes métallocènes de métaux du IV$^e$ et du V$^e$ sous-groupe du système périodique et des composés d'oxyde d'aluminium oligomères.

**9.** Copolymères statistiques selon la revendication 8, pouvant être obtenus par polymérisation en phase gazeuse à des températures dans la gamme de 30 à 100 °C et à des pressions dans la gamme de 5 à 40 bar.

**10.** Copolymères statistiques selon les revendications 8 ou 9, où, à titre de complexes métallocènes de métaux du IV$^e$ et du V$^e$ sous-groupe du système périodique,
on utilise des complexes métallocènes répondant à la formule générale IV

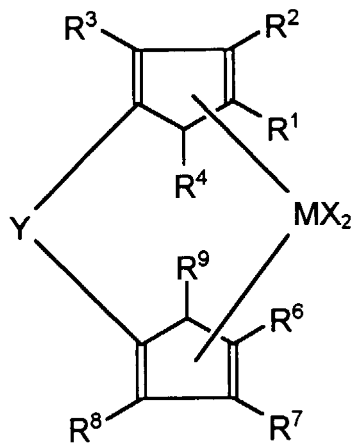

IV

dans laquelle les substituants présentent la signification suivante :

| | |
|---|---|
| M | représente du titane, du zirconium, de l'hafnium, du vanadium, du niobium ou du tantale, |
| X | représente un atome de fluor, un atome de chlore, un atome de brome, un atome d'iode, un atome d'hydrogène, un groupe alkyle en $C_1$ à $C_{10}$, un groupe aryle en $C_6$ à $C_{15}$ ou un groupe -$OR^5$, |
| où $R^5$ | représente un groupe alkyle en $C_1$ à $C_{10}$, un groupe aryle en $C_6$ à $C_{15}$, un groupe alkylaryle, un groupe arylalkyle, un groupe fluoroalkyle ou un groupe fluoroaryle avec respectivement 1 à 10 atomes de carbone dans le résidu alkyle et 6 à 20 atomes de carbone dans le résidu aryle, |
| $R^1$ à $R^4$ et $R^6$ à $R^9$ | représentent un atome d'hydrogène, un groupe alkyle en $C_1$ à $C_{10}$, un groupe cycloalkyle à 5 à 7 membres, qui peut lui-même porter des groupes alkyles en $C_1$ à $C_{10}$ à titre de substituants, un groupe aryle en $C_6$ à $C_{15}$, ou un groupe arylalkyle, deux résidus adjacents pouvant éventuellement représenter ensemble des groupes cycliques présentant 4 à 15 atomes de carbone, ou un groupe $Si(R^{10})_3$ avec |
| $R^{10}$ | représente un groupe alkyle en $C_1$ à $C_{10}$, un groupe aryle en $C_6$ à $C_{15}$, ou un groupe cycloalkyle en $C_3$ à $C_{10}$, |
| Y | représente $R^{11}R^{12}Z\langle$ ou |

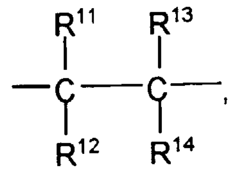 ,

| | |
|---|---|
| où Z | représente du silicium, du germanium, de l'étain ou du carbone, |
| $R^{11}$, $R^{12}$, $R^{13}$, $R^{14}$ | représentent un atome d'hydrogène, un groupe alkyle en $C_1$ à $C_{10}$, un groupe cycloalkyle en $C_3$ à $C_{10}$ ou un groupe aryle en $C_6$ à $C_{15}$, où deux résidus adjacents peuvent éventuellement représenter ensemble des groupes cycliques présentant 4 à 15 atomes de carbone, |

et à titre de composés d'oxyde d'aluminium oligomères
des composés alumoxanes à chaîne ouverte ou cycliques répondant aux formules générales V ou VI

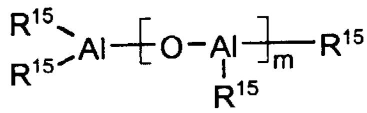

V

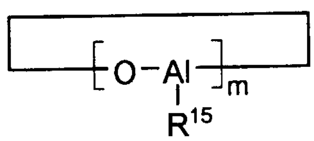

VI

où $R^{15}$ représente un groupe alkyle en $C_1$ à $C_4$ et m signifie un nombre entier de 5 à 30.

**11.** Procédé de préparation de copolymères statistiques du propylène selon les conditions de procédé de la revendication 8.

**12.** Utilisation des copolymères statistiques selon les revendications 1 à 10 pour la préparation de fibres, de feuilles et d'objets moulés.

**13.** Fibres, feuilles et objets moulés pouvant être obtenus à partir de copolymères statistiques selon les revendications 1 à 10 à titre de constituants essentiels.